Europäisches Patentamt

(19) European Patent Office

Office européen des brevets

(11) Veröffentlichungsnummer: **0 168 508**
**A1**

(12) # EUROPÄISCHE PATENTANMELDUNG

(21) Anmeldenummer: **84108318.1**

(51) Int. Cl.⁴: **G 01 L 5/16**, G 01 M 9/00

(22) Anmeldetag: **14.07.84**

(43) Veröffentlichungstag der Anmeldung: **22.01.86**
**Patentblatt 86/4**

(71) Anmelder: **CARL SCHENCK AG,**
**Landwehrstrasse 55 Postfach 40 18, D-6100 Darmstadt (DE)**

(72) Erfinder: **Giesecke, Peter, Dr. Dipl.-Phys., Talstrasse 2 a, D-6101 Seeheim-Stettbach (DE)**

(74) Vertreter: **Brand, Fritz, Dipl.-Ing., Carl Schenck AG Patentabteilung Landwehrstrasse 55 Postfach 4018, D-6100 Darmstadt (DE)**

(84) Benannte Vertragsstaaten: **AT BE CH DE FR GB IT LI LU NL SE**

(54) Verfahren und Vorrichtung zur Bestimmung von Momenten bei aerodynamischen Messungen an Fahrzeugen auf Windkanalwaagen.

(57) Ein Verfahren zur Bestimmung von Roll-, Nick- und/oder Giermomenten bei aerodynamischen Messungen an Fahrzeugen auf Windkanalwaagen, bei denen die Momente aus Kraftmessungen an der Windkanalwaage ermittelt werden, wird dadurch verbessert, daß bei der Momentenermittlung Lageänderungen des Fahrzeugs auf der Waage, die sich durch die Einwirkung von Luftkräften infolge von Elastizitäten im Fahrwerk, nämlich von Radaufhängung und Reifen, ergeben, berücksichtigt werden, wobei aus Lageänderungen des Fahrzeugs sowie Gewichts- und/oder Luftkräften Korrekturwerte gebildet werden und die gemessenen bzw. ermittelten Momente mit Hilfe der Korrekturwerte berichtigt werden. Eine Vorrichtung zur Durchführung des Verfahrens weist Längenmeßeinrichtungen (5) auf, die an der Windkanalwaage (3) und/oder am Fahrzeug (6) angeordnet sind und die Abweichung der Längsachse und/oder der Querachse des Fahrzeugs (6) aus seiner Mittellage erfassen, sowie eine Auswerteeinrichtung, die die gemessenen Momente mit Hilfe der Korrekturwerte berichtigt.

Seitenansicht

Verfahren und Vorrichtung zur Bestimmung von Momenten bei aerodynamischen Messungen an Fahrzeugen auf Windkanalwaagen

Die Erfindung betrifft ein Verfahren zur Bestimmung von Roll-, Nick- und/oder Giermomenten bei aerodynamischen Messungen an Fahrzeugen auf Windkanalwaagen, bei dem die Momente aus Kraftmessungen an der Windkanalwaage ermittelt werden, sowie eine Vorrichtung zur Durchführung des Verfahrens.

Bei Fahrzeugversuchen auf Windkanalwaagen werden zur Messung von Luftkräften und Momenten Mehrkomponentenwaagen verwendet. Bekannt sind sogenannte 6-Komponentenwaagen und 7-Komponentenwaagen.

Bei 6-Komponentenwaagen ist eine einzige Waagenplattform vorhanden, auf der das Fahrzeug steht bzw. befestigt ist. Es werden die Kräfte in den drei Raumachsen und die Momente um diese Achsen ermittelt, das heißt insgesamt sechs Komponenten.

Bei 7-Komponentenwaagen sind vier einzelne Waagenplattformen vorgesehen, auf denen die vier Räder eines Fahrzeugs stehen bzw. befestigt sind. Bei dieser Waagenbauart werden die Aufstandskräfte der vier Räder einzeln gemessen. Weiterhin werden die Seitenkräfte an den beiden Fahrzeugachsen sowie die Luftwiderstandskraft in der Fahrzeuglängsachse gemessen, also insgesamt sieben Komponenten. Aus diesen werden die interessierenden Kräfte und Momente ermittelt.

Es hat sich nun überraschenderweise gezeigt, daß die Genauigkeit der Momentenmessung bei 6-Komponenten-

- 2 -

waagen erheblich verbessert werden kann, wenn bei angeströmtem Fahrzeug die geringfügigen, durch Luftkräfte bedingten Lageänderungen des Fahrzeugs auf der Waage infolge der Elastizität von Reifen und Radaufhängung berücksichtigt werden. Bei 7-Komponentenwaagen werden diese Lageänderungen teilweise selbsttätig kompensiert.

Durch das erfindungsgemäß vorgeschlagene Verfahren mit Berücksichtigung der Lageänderung des Fahrzeugs auf der Waage und der Bildung von Korrekturwerten nach Patentanspruch 1 kann die Meßgenauigkeit von 6-Komponentenwaagen bei der Momentenmessung erhöht und der Meßfehler gegenüber 7-Komponentenwaagen nicht unerheblich herabgesetzt werden. Die weiteren Patentansprüche betreffen Ausgestaltungen der Erfindung sowie Vorrichtungen zur Durchführung des beanspruchten Verfahrens.

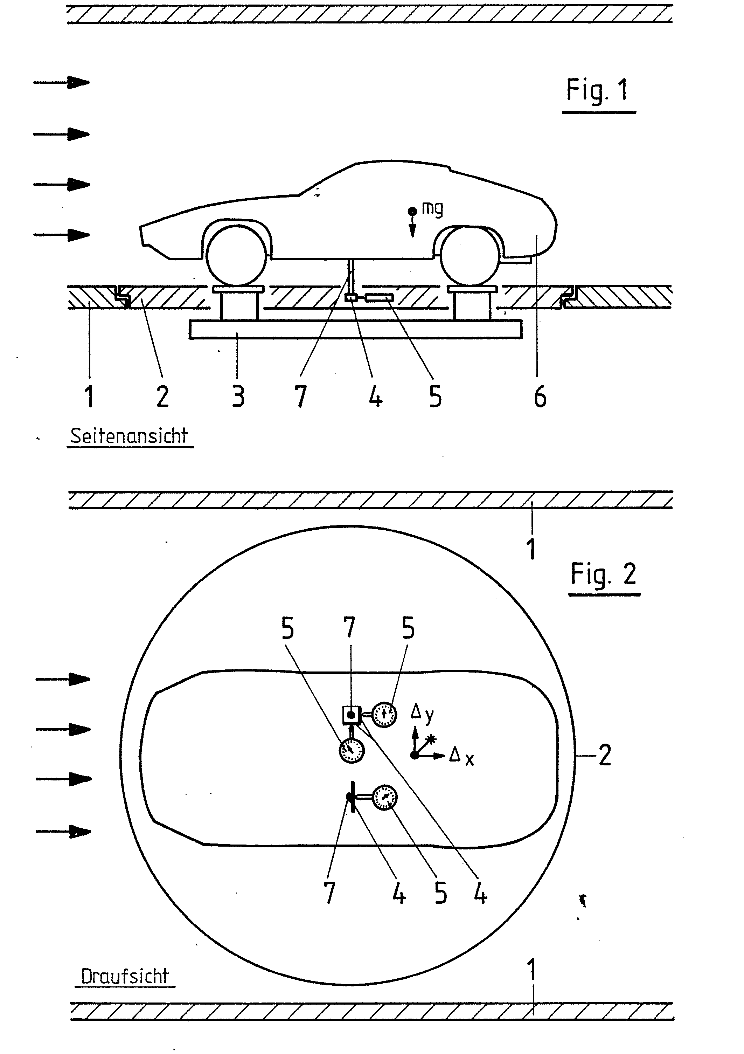

Die Erfindung wird nachstehend an einem Ausführungsbeispiel in der Zeichnung dargestellt und in der Beschreibung näher erläutert. Die Zeichnung zeigt in stark vereinfachter, schematischer Darstellung in Figur 1 eine Seitenansicht und in Figur 2 eine Draufsicht auf eine Windkanalwaage mit einem Fahrzeug und den erfindungsgemäßen Längenmeßvorrichtungen.

Das im Windkanal 1 zu prüfende Fahrzeug 6 steht auf einer 6-Komponenten-Windkanalwaage 3. Die Räder des Fahrzeugs sind hierbei in geeigneter Weise an Aufstandsflächen der Waage 3 befestigt. Die Aufstandsflächen sind fest miteinander bzw. mit der Waage verbunden, so daß nicht Einzelkräfte an den Rädern, sondern Gesamtkräfte ermittelt werden. Der Boden unter dem Fahrzeug bzw. im Bereich der Waage wird durch einen Drehtisch 2 gebildet, der berührungsfrei zur Windkanalwaage 3 angeordnet ist. Weitere Einzelheiten zum Aufbau und der Meßeinrichtung von Windkanalwaagen sind dem Fachmann bekannt und daher nicht dargestellt.

An der Unterseite des Fahrzeugs 6 sind steife, dünne Stahlstifte 7 angebracht, die in Ausnehmungen des Drehtischs 2 hineinragen. Am unteren Ende dieser Stahlstifte 7 befinden sich plane Meßflächen 4, die von Meßuhren 5 abgetastet werden. Die Meßuhren 5 sind ebenfalls innerhalb der Ausnehmungen des Drehtisches 2 angeordnet.

Im dargestellten Ausführungsbeispiel sind die Stahlstifte 7 mit Abstand voneinander in einer Querachse des Fahrzeugs 6 angebracht. Es sind 2 Stahlstifte vorgesehen, wobei ein Stahlstift zwei im Winkel von 90$^o$ zueinander angeordnete Meßflächen 4 aufweist. Mit Hilfe von drei Meßuhren, wie dargestellt, kann die Längsverschiebung des Fahrzeugs an zwei Meßstellen der Querachse und die Querverschiebung an einer Meßstelle erfaßt werden, wenn Luftkräfte auf das Fahrzeug einwirken. Bei der Anordnung von zwei Meßstellen an einer Achse kann der Einfluß von Drehbewegungen des Fahrzeugs berücksichtigt bzw. ausgeschaltet werden.

Anstelle der Meßanordnung mit zwei Stahlstiften bzw. Meßstellen kann auch ein Stahlstift mit zwei im Winkel von 90$^o$ zueinander angeordneten Meßflächen und entsprechend angeordneten Meßuhren im Schwerpunkt des Fahrzeugs vorgesehen werden. Ebenso ist es möglich, zwei Stahlstifte mit Meßflächen und Meßuhren an der Längsachse des Fahrzeugs anzuordnen. Auch kombinierte Anordnungen an der Längs- und Querachse oder an anderen geeigneten Stellen am Fahrzeug sind möglich.

Bei der beschriebenen Anordnung sind als Längenmeßeinrichtungen mechanische Meßuhren vorgesehen. Zweckmäßigerweise werden jedoch Meßeinrichtungen mit elektrischem Ausgang verwendet, deren Ausgangssignale leicht weiterverarbeitet werden können. So können z. B. auch kapazitive oder induktive, optische oder andere geeignete Längenmeßeinrichtungen verwendet werden.

Der Nachteil der Störung des Strömungsprofils durch die dem Luftstrom ausgesetzten Stahlstifte 7 kann vermieden werden, wenn man ein berührungsloses Meßverfahren anwendet, beispielsweise ein kombiniertes optisch-elektrisches Verfahren mit einer am Fahrzeugboden befestigten Laserdiode, die auf eine in der Drehscheibe 2 eingebaute Diodenmatrix ausgerichtet ist. ü Die Wanderung des Lichtflecks auf der Matrix in x- und y-Richtung wird direkt in digitaler Form ausgegeben und ist somit ein Maß für die Fahrzeugverschiebung. Die digitalen Meßwerte können zur Berichtigung der gemessenen Momente z. B. in einem Rechner weiterverarbeitet werden.

Die Ausgangssignale der Meßuhren bzw. der Längenmeßeinrichtungen dx und dy ergeben die Verschiebung des Massenschwerpunktes des zu untersuchenden Fahrzeugs.
Aus der ermittelten Schwerpunktverschiebung und der
Gewichtskraft mg des Fahrzeugs erhält man die zur
Korrektur von Nick- und Rollmoment erforderlichen
Daten. Die Korrekturwerte stellen hierbei Momente
bzw. Momentenfehler dar, die zur Berichtigung der gemessenen Momente verwendet werden.

Auf das Giermoment wirkt sich die Gewichtskraft durch
Verschiebung des Fahrzeugsschwerpunktes nicht aus,
d. h. das Giermoment wird durch die Änderung der Lage
der Fahrzeugmasse nicht beeinflußt. Jedoch können
Fehler durch Luftkräfte auftreten, die sich bei Lageänderungen des Fahrzeugs sowohl auf das Giermoment
als auch auf Nick- und Rollmoment auswirken. Wenn
beispielsweise das Fahrzeug in der Querachse verschoben
wird (in Richtung dy), ergibt sich durch die Luftwiderstandskraft (in Fahrzeuglängsrichtung wirkend)
ein Fehler beim Giermoment. Eine Verschiebung in der
Fahrzeuglängsachse ergibt einen Fehler beim Nickmoment,
wenn Auftriebskräfte am Fahrzeug wirken usw. Da die
Luftkräfte am Fahrzeug im allgemeinen um eine Größenordnung kleiner sind als die Gewichtskraft des Fahrzeugs, ist ihre Berücksichtigung nur bei hohen Genauigkeitsanforderungen notwendig.

Bei der Korrektur von Fehlereinflüssen durch Luftkräfte kann es erforderlich sein, als weitere Meßgröße die Höhenverlagerung des Fahrzeugs zu ermitteln
(im Ausführungsbeispiel nicht dargestellt).

Die an den Längenmeßeinrichtungen gewonnenen Meßdaten, die vorzugsweise als elektrische Signale vorliegen, können einer nicht dargestellten Auswerteeinrichtung zugeführt werden, die aus den gemessenen Werten, der Gewichtskraft des Fahrzeugs und/oder den jeweils relevanten Luftkräften Korrekturwerte bildet und die gemessenen Momente durch die Korrekturwerte berichtigt. Die Auswerteeinrichtung kann auch als Recheneinrichtung bzw. Teil einer Recheneinrichtung ausgebildet sein, wobei auch die bei Windkanalwaagen meist vorhandenen Recheneinrichtungen verwendet werden können.

Bei Verwendung von Recheneinrichtungen können die Korrekturwerte fortlaufend aus den gemessenen Werten der Längenmeßeinrichtungen und/oder Luftkräfte gebildet und die gemessenen Momente fortlaufend berichtigt werden, so daß immer die berichtigten Momentenwerte zur Verfügung stehen (On-Line-Verfahren).

In einem vereinfachten Verfahren können die Korrekturwerte zur Berichtigung der auf der Windkanalwaage gemessenen Momente auch rechnerisch aus den Fahrzeugdaten und in Abhängigkeit von den einwirkenden Luftkräften ermittelt werden oder es kann aus Versuchs- oder Erfahrungswerten eine Abschätzung der erforderlichen Korrekturwerte vorgenommen werden. Bei dieser Verfahrensweise können Längenmeßeinrichtungen an der Windkanalwaage bzw. am Fahrzeug entfallen.

Verfahren und Vorrichtung zur Bestimmung von Momenten
bei aerodynamischen Messungen an Fahrzeugen auf Windkanalwaagen

Patentansprüche

1. Verfahren zur Bestimmung von Roll-, Nick- und/oder
Giermomenten bei aerodynamischen Messungen an Fahrzeugen auf Windkanalwaagen, bei denen die Momente
aus Kraftmessungen an der Windkanalwaage ermittelt
werden, dadurch gekennzeichnet, daß bei der Momentenermittlung Lageänderungen des Fahrzeugs (6) auf
der Waage (3), die sich durch die Einwirkung von
Luftkräften infolge von Elastizitäten im Fahrwerk,
nämlich von Radaufhängung und Reifen, ergeben, berücksichtigt werden, wobei aus Lageänderungen des
Fahrzeugs (6) sowie Gewichts- und/oder Luftkräften
Korrekturwerte gebildet werden und die gemessenen
bzw. ermittelten Momente mit Hilfe der Korrekturwerte berichtigt werden.

2. Verfahren nach Anspruch 1, dadurch gekennzeichnet,
daß Verschiebungen des Fahrzeugs (6) aus einer
Mittel- oder Anfangslage gemessen und aus den gemessenen Werten die Korrekturwerte gebildet werden.

3. Verfahren nach Anspruch 2, dadurch gekennzeichnet,
daß die Abweichung der Längs- und/oder Querachse
des Fahrzeugs (6) aus der Mittellage in einer im
wesentlichen horizontalen Ebene gemessen wird.

4. Verfahren nach einem der vorhergehenden Ansprüche
dadurch gekennzeichnet, daß die Korrekturwerte fortlaufend gebildet und die Momente fortlaufend berichtigt werden.

5. Vorrichtung zur Durchführung des Verfahrens nach einem der vorhergehenden Ansprüche, mit einer Windkanalwaage mit Momentenmeßeinrichtungen, gekennzeichnet durch Längenmeßeinrichtungen, die an der Windkanalwaage (3) und/oder am Fahrzeug (6) angeordnet sind und die Abweichungen der Längsachse und/oder der Querachse des Fahrzeugs (6) aus eines Mittellage erfassen und durch eine Auswerteeinrichtung, die aus den gemessenen Werten der Längenmeßeinrichtungen sowie Gewichts- und/oder Luftkräften die Korrekturwerte bildet und die gemessenen Momente mit Hilfe der Korrekturwerte berichtigt.

6. Vorrichtung nach Anspruch 5, dadurch gekennzeichnet,, daß die Längenmeßeinrichtungen als mechanische, elektrische, optische oder kombinierte Meßeinrichtungen (5) ausgebildet sind.

7. Vorrichtung nach Anspruch 5 oder 6, dadurch gekennzeichnet, daß mindestens eine Längenmeßeinrichtung im Schwerpunkt des Fahrzeugs (6) angeordnet ist.

8. Vorrichtung nach Anspruch 5 oder 6, dadurch gekennzeichnet, daß die Längenmeßeinrichtungen an der Längs- und/oder der Querachse des Fahrzeugs (6) angeordnet sind.

9. Vorrichtung nach Anspruch 5, dadurch gekennzeichnet, daß die Auswerteeinrichtung als Recheneinrichtung ausgebildet ist.

-A/A-  0168508

Fig. 1

mg

1  2  3  7  4  5  6

Seitenansicht

Fig. 2

5  7  5

Δy

Δx

2

7  4  5  4

1

Draufsicht

1

**Europäisches Patentamt**

**EUROPÄISCHER RECHERCHENBERICHT**

0168508
Nummer der Anmeldung

EP 84 10 8318

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 624 647 (PFISTER WAAGEN GMBH) <br> * Ansprüche 1-3; Seite 5, letzter Absatz - Seite 6, Zeile 12; Figuren 1,2 * <br><br> --- | 1 | G 01 L 5/16 <br> G 01 M 9/00 |
| A | DE-A-2 926 213 (CARL SCHENCK AG) <br> * Ansprüche 1-8 * <br><br> ----- | 1 | |

| RECHERCHIERTE SACHGEBIETE (Int. Cl.4) |
|---|
| G 01 L 5/16 <br> G 01 M 9/00 |

Der vorliegende Recherchenbericht wurde für alle Patentansprüche erstellt.

| Recherchenort | Abschlußdatum der Recherche | Prüfer |
|---|---|---|
| BERLIN | 25-04-1985 | KOEHN G |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82